# EUROPEAN PATENT APPLICATION

(11) **EP 2 070 638 A1**
(43) Date of publication of application: **17.06.2009**
(21) Application number: 07122863.9
(22) Date of filing: 11.12.2007
(51) Int. Cl.: B23K 35/362, B23K 35/36

(54) **Method for brazing of titanium and aluminium parts and parts obtainable thereby**

(71) Applicant: Solvay Fluor GmbH, 30173 Hannover (DE)
(72) Inventor: Born, Thomas, 31188 Holle (DE); Swidersky, Hans-Walter, 30175 Hannover (DE); Ottmann, Alfred, 30629 Hannover (DE)
(74) Representative: Jacques, Philippe

(57) **Abstract**

Aluminium and titanium parts can be joined to each other by brazing in the presence of an alkali metal fluoroaluminate. According to the process, the assemblies of aluminium and titanium, joint by brazing, can be used for example in or as chemical apparatus, as parts for cars, boats, space transportation systems, or airplanes, or for manufacturing heat exchangers.

## Description

The invention concerns a method for brazing parts from titanium or titanium alloys and parts of aluminium or aluminium alloys.

It is well-known that aluminium parts can be brazed together using a flux and a solder. Titanium finds use in parts for cars and especially in airplanes because of its low weight and strength. Titanium is resistant against aggressive chemicals and thus can be applied in chemical reaction apparatus, or in lines or for transporting aggressive chemical media. The reason for substituting a part of titanium by aluminium, where possible, is that aluminium is much cheaper than titanium. For example, by joining titanium and aluminium parts, they can be applied in the form of composite material, e.g. as "sandwich" material.

Fluxes for brazing aluminium parts with other aluminium parts are known. The fluxes are used for providing a clean surface and thus allow for a strong joint to be formed between the aluminium parts. A flux consisting of a mixture of potassium tetrafluoroaluminate and tripotassium hexafluoroaluminate was disclosed in US patent 3,951,328. A flux for aluminium brazing composed of potassium tetrafluoroaluminate and the hydrate of dipotassium pentafluoroaluminate was disclosed in US 4,579,605. WO 82/02014 discloses that steel can be joined with aluminium by applying an aluminium-silicon alloy as solder and a mixture of potassium fluoride and aluminium fluoride as flux.

Aluminium can also be joined to titanium. US 4486647 discloses a method of joining aluminium to titanium by welding using an aluminium wire as filler. Because titanium has a melting point of around 1670 °C, while the melting point of aluminium is around 660 °C, the temperature on the titanium side is kept below 2000 °C, and the temperature in the middle of the weld is maximally 1500°C.

The problem of the present invention is to provide for a technically simple and reliable method to join parts made from aluminium or aluminium alloys and parts made from titanium or titanium alloys. This object is achieved by the method of the present invention.

The present invention provides for a method of joining aluminium or aluminium alloys and titanium or titanium alloys in the presence of a flux based on alkali metal fluoroaluminate.

The term "aluminium alloys" includes aluminium containing iron, manganese, magnesium and/or other alloying metals. In principle, any alloying metal might be comprised. If the aluminium comprises magnesium, cesium fluoroaluminate can be applied as brazing agent or co-brazing agent. The term "comprise", in the context of the present invention, includes the meaning of "consist of".

The term "titanium" includes pure titanium as well as so-called "commercially pure" titanium. Such titanium is classified into several "CP grades". The term "CP" denotes "commercially pure" titanium which does not necessarily mean unalloyed titanium. For example, CP 5 denotes TiA16V4 alloy. Impurities and dissolved gases are accepted in unalloyed titanium. The content of yttrium, for example, must be lower than 0.005 % by weight. CP titanium grade 2 for example has very low contents of carbon, nitrogen, oxygen, iron, hydrogen and yttrium. CP titanium grade 4 has a lower hydrogen content than grade 2, but a higher content of iron and oxygen, and a higher strength.

The term "titanium alloys" includes alloys of titanium with β-stabilizing metals or elements, e.g. molybdenum, iron, vanadium, iron, chromium and Niob, and with α-stabilizing metals or elements, e.g. aluminium, tin, zirconium, oxygen and nitrogen. Titanium α alloys, near-α alloys, β alloys and near-β alloys can be brazed. Examples for alloys are TiA16Sn2Zr4Mo2 optionally with additional silicon; TiA16V4; and 5Cr3A13Sn3.

The term "alkali metal" in the present invention denotes preferably potassium and cesium, especially potassium or a combination of potassium and cesium. The term "fluoroaluminate" denotes tetrafluoroaluminate, pentafluoroaluminate, a combination of both and their hydrates. A very preferred flux is composed of potassium tetrafluoroaluminate, dipotassium pentafluoroaluminate, the respective hydrates thereof or their mixtures. A mixture of potassium tetrafluoroaluminate and dipotassium pentafluoroaluminate is especially preferred. In this mixture, the respective fluoroaluminate can be present partially or completely in the form of hydrates. Mixtures of potassium tetrafluoroaluminate and dipotassium pentafluoroaluminate which are very suitable in the process of the present invention are commercially available under the trade name Nocolok^{®}.

The flux can be applied in compositions known in the art. For example, it may include potassium hexafluorosilicate as described in US patent 6,019,856 in an amount of up to 50 % by weight or even more. It may comprise irreversibly dehydrated dipotassium pentafluoroaluminate as described by US patent 6,264,096 preparable by a dehydrating heat treatment at a temperature preferably higher than 265 °C. This flux has a long shelf life and provides stable suspensions in water.

It may comprise metallic additives which are solder precursors, for example, silicon, germanium or copper as described in US 5,100,048. The ratio of silicon to flux can be in the range from 0.1 - 3: 1. Nevertheless, it is preferred to apply a filler metal or filler metal alloy, also when a solder precursor is comprised. For example, solder comprising aluminium and silicon is very suitable, e.g., alloys named as 4343 (AlSi7), 4045 (AlSi10), or 4047 (AlSi12), or zinc-aluminium alloy.

The flux may comprise additives which improve the properties of the brazed joints or the surface of the metal parts. For example, it may comprise potassium fluorozincate as described in US 6,432,221. Potassium fluorozincate behaves like a flux itself and improves the brazed surface by forming a protective layer of zinc. It may comprise potassium or cesium fluorostannate flux as described in US 6,880,746. Potassium or cesium fluorostannate also behaves like a flux and forms a protective tin layer on the brazed joints.

The flux may comprise cesium fluoroaluminate as described in US 4,670,067. The amount of cesium fluoroaluminate (which, for example, can be present in the form of cesium tetrafluoroaluminate, dicesium pentafluoroaluminate, tricesium hexafluoroaluminate or any combinations thereof) is very variable. For example, it can constitute 100 % of the flux. Preferably, the content of cesium fluoroaluminate is lower, for example, equal to or lower than 10 % by weight of the total flux set to 100 % by weight. The advantage of applying fluxes comprising potassium fluoroaluminate and cesium fluoroaluminate is that aluminium alloys containing more than, for example, 0.2 % by weight, of magnesium can be brazed.

The flux may also comprise further additives which improve the brazing process or the surface properties of the joint metal parts. For example, it may comprise zirconium fluoride and/or titanium fluoride as described in US 2004/0163734. The addition of these compounds may improve the corrosion resistance, the adhesion of any coating and reduce the formation of odors.

The flux may also comprise non-corrosive additives, for example, those described in WO 2005/092563. These additives which can be incorporated into the flux by co-precipitation or by mechanical mixing, improve the surface quality or the flow of flux. The additives comprise metal cations of metals of the 2. to 5. main group of the periodic system of the elements, especially strontium, indium, tin, antimony, bismuth, zirconium, niobium, cerium, yttrium or lanthanum, e.g. K₂ZrF₆ or K₂TiF₆. If they are introduced into the flux by mechanical mixing, they metal cations are preferably applied in the form of the respective fluorides. For co-precipitation, preferably, aluminium oxide trihydrate is reacted with hydrofluoric acid in the presence of metal compounds of the additives, for example, the oxides, halides, nitrates, carbonates, sulfates, phosphates, borates or hexafluorosilicates. After reaction with HF, a step of precipitation with an aqueous solution of an alkali metal hydroxide, especially of potassium hydroxide is performed. Also here, the presence of cesium can improve the magnesium tolerance of the brazing process.

The flux can be applied to the parts to be brazed in a conventional manner. For example, it can be applied in a dry form as powder. The dry application can be supported electrostatically. Alternatively, the flux can be applied in the form of a flux composition which comprises a solvent, optionally also a binder or a thickener. For example, the flux composition be an aqueous suspension or as suspension in an organic solvent, for example, in mono-, di- or tribasic aliphatic alcohols, e.g. methanol, ethanol, isopropanol, ethylene glycol or glycerine, or in ethers, for example, in dibutyl ether, or alkylene diethers or triethers, for example, ethylene glycol dialkyl ether, especially ethylene glycol dimethyl ether. Aqueous suspensions are preferred.

If a thickener is comprised, the thickener may be a partial ether with an additional hydroxy group. 2-butoxy-ethanol is a very suitable thickener.

The flux composition may also comprise a binder. Any of the known binders can be used. For example, the polymeric binders disclosed in EP-A-1287941 are very suitable, for example, polyurethanes, resins, phthalates, acrylates, vinyl resins, epoxy resins, nitrocellulose and polyolefins, see [0016]. The flux composition may also comprise a thixotropic agent, for example, gelatine, pectines, acrylates or polyurethanes as described in EP-A-1287941, [0032] to [0039].

The flux composition can even be applied as a paste, with or without filler metal or filler alloy.

The flux or flux composition can be applied to the aluminium and/or titanium parts in conventional manner. As already mentioned, the flux can be applied in dry form, preferably electrostatically. Flux suspensions can be sprayed onto the parts, or by painting.

The flux is applied preferably in an amount equal to or greater than 0.01 g/m². More preferably, it is applied in an amount of equal to or greater than 0.1 g/m². Especially preferably, it is applied in an amount of equal to or greater than 2 g/m².

Preferably, it is applied in an amount equal to or lower than 50 g/m². If a flux composition is applied (e.g. a composition with water or an organic solvent, or a paste), the composition is applied in an amount such that the flux loading mentioned above is achieved.

As mentioned above, brazing preferably is performed in the presence of a solder metal or metal alloy. The solder metal can be contained in the flux or flux composition, e.g. in powder form. Alternatively, the solder metal or solder metal alloy can be plated on one or both of the parts to be joined.

Brazing can be performed in inert gas atmosphere, for example, in an atmosphere composed of nitrogen, helium or argon or mixtures thereof. Preferably, it is performed in argon atmosphere. Highly purified argon is especially suitable. It is assumed that also mixtures of carbon dioxide and argon should work. In another very suitable embodiment, it is performed under vacuum. The advantage of vacuum brazing is that the brazing temperature may be lower.

The parts can also be joined by laser brazing. Such a process is described in US 2003/0178399.

Brazing is performed at a temperature higher than the melting point of the flux and the filler metal and high enough to form a solid joint. Preferably, the brazing temperature is equal to or higher than 550 °C, very preferably equal to or higher than 570 °C. Preferably, the brazing temperature is lower than or equal to 680 °C, especially preferably equal to or lower than 650 °C. In case of vacuum brazing, the temperatures may be even lower compared to brazing in the presence of gases.

Generally, the process can be applied to join any titanium or titanium alloy part to any part of aluminium or aluminium alloys, whatever the purpose of such joined parts. One advantage to substitute aluminium for a part of the titanium is that aluminium is much cheaper than titanium. The process is especially suitable to manufacture apparatus designed to transport aggressive media because titanium is very resistant. It also can be applied to manufacture heat exchangers comprising aluminium or aluminium alloy fins, and tubing made from titanium.

The advantage of the process according to the present invention is that a joint can be produced between aluminium and titanium in a simple and reliable manner.

Another aspect of the present invention concerns assembled parts made from parts of aluminium (including aluminium alloys) and parts of titanium (including titanium alloys) wherein aluminium and titanium parts are joint to each other by brazing in the presence of an alkali metal fluoroaluminate. Such parts are available according to the processes described above. The term "assembled parts" includes sandwich structures useful for construction of machines, vehicles, or buildings. For example, parts made from aluminium and titanium can be applied in the boat building industry, offshore industry, in space transportation systems and in apparatus and machinery applied in the health care industry. Parts made from aluminium and titanium can, for example, be applied in the construction of heat exchangers, e.g. for air conditioning, for example in stationary refrigeration like freezers, and especially for mobile air conditioning. Brazed parts of aluminium and titanium can also be applied for purposes where contact with aggressive chemicals occurs, for example, in storage tanks for chemical substances, for pipes, or apparatus used in the chemical industry, e.g. for reactors for chemical reactions. The following examples explain the invention further without intention to limit it.

### Examples

General: Titanium sheets ASTMB 265, a CP grade 2 material, in the form of sheets of a thickness of 1.2 mm were applied.
Solder:
AlSi12, thickness 1.6 mm, length 10 mm
ZnAl15, thickness 1.6 mm, length 7 mm.
Aluminium angle:
99.5 % by weight Al, 0.5 · 40 mm in total, each side of the V-shaped piece had a length of 20 mm.
Performed test: fillet test in a glass brazing oven.
General procedure: dry flux was applied to the titanium coupon (size: 20 · 20 · 1.2 mm), two drops of isopropanol were added, and the flux was uniformly distributed. Then, the coupon was dried at 60 to 90 °C. Then, the 90° aluminium angle was positioned on the coupon, a piece of the solder metal was positioned at one end of the angle, the assembly was put into the brazing oven, and brazing was started. Argon (purity 4.6) was introduced into the oven during brazing, the temperature rose with a rate of 30 °C per minute until 605 °C were reached, the assembly was held at that temperature for 2 minutes, and then, the assembly was cooled. The assembly was then rated:
1) Optimal brazing
2) Marked fillet
3) Rupture above the fillet in the angle
4) Surface of the coupon:
4a) untreated - silvery metallic
4b) matt grey
4c) dark grey
4d) black
5) Rupture at the contact between coupon and aluminium angle
6) No brazing
Applied fluxes and solder metals:
Test pairing 1: Potassium fluoroaluminate (Nocolok^{®)} and AlSi12
Test pairing 2: A mixture of potassium fluoroaluminate and cesium fluoroaluminate with about 1.5 % by weight of Cs and AlSi12 solder
Test pairing 3: cesium fluoroaluminate and ZnAl15 solder
Test pairing 4: Paste PEN 1047 (a flux composition comprising potassium fluoroaluminate flux, binder and organic solvent) and AlSi12 solder
Test pairing 5: Mixture of potassium fluoroaluminate and silicon (Nocolok Sil^{®}), a solder precursor
Test pairing 6: Mixture of potassium fluoroaluminate and silicon (Nocolok Sil^{®}), a solder precursor, and AlSi12 solder

| Example | Test pairing | Flux loading [g/m²] | Rating of joinder |
|---|---|---|---|
| 1 | 1 | 20 | 1,2,3,4b |
| 2 | 1 | 20 | 1,2,3,4b |
| 3 | 1 | 20 | 1,2,3,4b |
| 4 | 2 | 20 | 1,2,3,4b |
| 5 | 2 | 20 | 1,2,3,4b |
| 6 | 2 | 20 | 1,2,3,4b |
| 7 | 3 | 20 | 4c, 5 |
| 8 | 3 | 20 | 4c, 5 |
| 9 | 3 | 20 | 4c, 5 |
| 10 | 4 | 30* | 1,2,3,4c |
| 11 | 4 | 30* | 1,2,3,4c |
| 12 | 4 | 30* | 1,2,3,4c |
| 13 | 5 | 20 | 6, 4d |
| 14 | 5 | 20 | 6, 4d |
| 15 | 6 | 20 | 5, 4d |
| 16 | 6 | 20 | 5, 4d |
| 17 | - | - | 4a - base material |

| | | | |
|---|---|---|---|
| * The dry loading was calculated. | | | |

The examples demonstrate that aluminium can be joined to titanium using fluxes suitable for brazing aluminium to aluminium. It appears that presence of a solder additional to or instead of a solder precursor is very advantageous.

## Claims

1. Method for brazing of titanium with aluminium in the presence of a flux based on alkali metal fluoroaluminate.

2. Method according to claim 1 wherein the alkali metal fluoroaluminate is potassium fluoroaluminate, cesium fluoroaluminate or a mixture of both.

3. Method according to claim 2 wherein the flux comprises potassium fluoroaluminate and cesium fluoroaluminate, wherein equal to or more than 0.1 % by weight and equal to or less than 10 % by weight of cesium fluoroaluminate, relative to the total fluoroaluminate flux content set to 100 % by weight, is comprised.

4. Method according to claim 1 wherein the alkali metal fluoroaluminate is applied as dry flux, in the form of a flux composition with an organic solvent, in the form of an aqueous flux composition or in the form of a paste.

5. Method according to claim 4 wherein the aqueous flux composition, the flux composition with an organic solvent or the paste comprises an additive, especially a binder, a thickener, a thixotropic agent, and/or a solder metal and/or solder metal alloy.

6. Method according to claim 1 wherein brazing is performed under inert gas atmosphere or under vacuum.

7. Method according claim 1 wherein brazing under inert gas is performed at a temperature equal to or higher than 550 °C, and at a temperature equal to or lower than 680 °C.

8. Method according to claim 1 wherein the flux comprises a mixture of potassium tetrafluoroaluminate and dipotassium pentafluoroaluminate and/or their hydrates.

9. Method according to claim 1 wherein car parts, airplane parts, heat exchangers or apparatus for chemical reactions are produced.

10. Brazed assembly comprising aluminium and titanium parts, obtainable by a process according to any one of claims 1 to 9.
